# EUROPEAN PATENT APPLICATION

(11) **EP 3 048 601 A1**
(43) Date of publication of application: **27.07.2016**
(21) Application number: 15305068.7
(22) Date of filing: 22.01.2015
(51) Int. Cl.: G09G 3/20, G06F 1/16, H04N 5/232

(54) **Method for displaying video frames on a portable video capturing device and corresponding device**

(71) Applicant: Thomson Licensing, 92130 Issy-les-Moulineaux (FR)
(72) Inventor: Demoulin, Vincent, 35576 Cesson-Sévigné (FR); Marquant, Gwenaëlle, 35576 Cesson-Sévigné (FR); Demarty, Claire-Hélène, 35576 Cesson-Sévigné (FR)
(74) Representative: Huchet, Anne

(57) **Abstract**

The present invention relates generally to video capturing with portable video capturing devices like smartphones, tablets, digital cameras or digital camcorders. It concerns a method for displaying video frames on a display screen coupled to a portable video capturing device. The method comprises the steps of:
- determining (S1) if the orientation of the portable device is substantially equal to 90 or 180 or 270 degrees from a reference orientation, said determination constituting a first condition to be met,
- determining (S1) if the portable device is capturing at least one video frame, said determination constituting a second condition to be met, and
- if said first and second conditions are met, displaying (S2), on the display screen, the video frames and a visual indicator indicating that the orientation of the portable video capturing device is substantially equal to 90 or 180 or 270 degrees from the reference orientation.

## Description

### 1. Technical Field

The present invention relates generally to video capturing with portable video capturing devices like smartphones, tablets, digital cameras or digital camcorders.

### 2. Background Art

Today, a lot of portable devices allow capturing video frames according to different orientations. This is notably the case of the smartphones, the tablets, the digital cameras and the digital camcorders. With such devices, the user can choose capturing video frames according to a landscape mode or a portrait mode by rotating appropriately the video capturing device. If the user holds his video capturing device according to a reference orientation, also called horizontal orientation, the video frames are captured in a landscape mode. And if the user holds his video capturing device according to an orientation perpendicular to the reference orientation, also called vertical orientation, the video frames are captured in a portrait mode.

The video frames are displayed on a display screen of the video capturing device as they are captured. When the user holds the video capturing device in a vertical orientation during the capture (video frames captured in a portrait mode), the video frames are displayed in a portrait mode on the display screen of the video capturing device and are therefore fully in line with the user's expectation.

It makes that the user does not become aware or does not realize that he is capturing video frames in a portrait mode. This can be problematic for post-processing applications, like automatic editing software used for editing video clips from a plurality of video frames captured by one or more video capturing devices. If the video frames do not include metadata on the orientation of the device when capturing said video frames, it can lead to video clips including video frames displayed in a landscape mode although they have been captured in a portrait mode.

In addition, all the big video screens that we use in the every day life, like computer screens, TV screens and movie screens, are conceived for displaying video frames in landscape mode. And you can not turn them for viewing video frames captured in a portrait mode.

The same problem arises when the user holds his video capturing device in an upside down position. The user is not aware that he is capturing video frames in an upside down landscape mode since the video capturing device automatically rotates the captured images 180 degrees before displayed them on its screen.

Some solutions exist for addressing this problem. Some applications such as "Horizon Capture App" prevent the user to capture vertical video clip by recording only a part of the image captured by the device, this part being indicated by a horizontal mask layered with the video really captured by the device. Such a method has two major drawbacks. First, the stored video does not benefit of the device sensor full resolution because only a part of the captured pixels are present in the final horizontal video. Second, because the user has to be focused on a small part of his device, the resulting video clip is more unsteady than video clips captured when the user can focus on the full screen.

### 3. Summary of Invention

An object of the invention is to propose a method for avoiding at least partially the above-mentioned drawbacks.

According to the invention, it is proposed to display in real time relevant information to the user capturing some video on whether he is holding his device in vertical position or an upside-down position. The immediate effect is to warn the user that he is capturing video frames which could be difficult to reuse later on within an edited video sequence and which are not adapted to the format of the most widespread screens.

The invention concerns a method for displaying at least one video frame on a display screen coupled to a portable video capturing device, said method comprising the steps of:
- determining if the orientation of said portable video capturing device is substantially equal to 90 or 180 or 270 degrees from a reference orientation, said determination constituting a first condition to be met,
- determining if the portable video capturing device is capturing at least one video frame, said determination constituting a second condition to be met, and
- if said first and second conditions are met, displaying, on said display screen, said at least one video frame and a visual indication indicating that the orientation of the portable video capturing device is substantially equal to 90 or 180 or 270 degrees from the reference orientation.

Thus the user of the portable video capturing device is warned that he is capturing video frames in a portrait mode or an upside down landscape mode which are not adapted to the format of the most widespread screens and/or which can be difficult to use for video editing.

Then when viewing the visual indication the user may decide or not to rotate his video capturing device in order to put it back in the reference orientation (horizontal position).

With this method, the user is aware that he is capturing video frames in a portrait mode or an upside down landscape mode. Another advantage is that such a warning does not prevent the user to capture vertical video clips in these modes if this is really his intention.

According to a particular embodiment, the orientation of the portable video capturing device is determined by a sensor embedded in the portable video capturing device.

According to a particular embodiment, the sensor is a gyroscope.

According to a particular embodiment, the orientation of the portable video capturing device is determined by analyzing the video content of said at least one video frame.

According to a particular embodiment, the visual indication is a symbol displayed on top of the at least one video frame displayed on the display screen.

According to a particular embodiment, the visual indication is an alteration of the at least one video frame displayed on the display screen. For example a shaded version of the video frame is displayed on the display screen.

The invention concerns also a portable video capturing device comprising
- an image capturing circuit for capturing at least one video frame,
- a memory for storing the captured video frame,
- a display screen for displaying the captured video frame, and
- a control unit for controlling said image capturing circuit, said memory and said display screen,
   wherein the control unit is configured to:
- determine if the orientation of said portable video capturing device is substantially equal to 90 or 180 or 270 degrees from a reference orientation and if the portable video capturing device is capturing at least one video frame, said determinations constituting respectively first and second conditions to be met, and
- if said first and second conditions are met, display, on the display screen, said at least one video frame and a visual indicator indicating that the orientation of the portable video capturing device is substantially equal to 90 or 180 or 270 degrees from the reference orientation.

In a particular embodiment, the portable video capturing device further comprises an orientation sensor for determining the orientation of the portable video capturing device, said orientation being provided to the control unit for determining if the orientation of the portable video capturing device is substantially equal to 90 or 180 or 270 degrees.

In a particular embodiment, the orientation sensor is a gyroscope.

In another embodiment, the control unit comprises a video processing unit for analyzing the video content of the captured video frame and determining the orientation of the portable video capturing device.

### 4. Brief description of the drawings

The invention can be better understood with reference to the following description and drawings, given by way of example and not limiting the scope of protection, and in which:
- Figure 1 is a flow chart of the successive steps of the method according to an embodiment of the invention;
- Figure 2 is a video frame on which a visual indicator according to the invention is superimposed; and
- Figure 3 is a schematic view of the global architecture of a portable video capturing device according to one embodiment of the invention.

### 5. Description of embodiments

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising," "includes" and/ or "including", when used herein, specify the presence of stated features, integers, steps, operations, elements and /or components, but do not preclude the presence or addition of one or more other features, integers, steps, operations, elements, components and /or groups thereof. Similarly, it is to be noticed that the term "coupled" should not be interpreted as being restricted to direct connections only. Thus, the scope of the expression "a device A coupled to a device B" should not be limited to devices or systems wherein an output of device A is directly connected to an input of device B. It means that there exists a path between an output of device A and an input of device B which may be a path including other devices or means.

In addition, the term "orientation" of a portable device is related to the orientation of the image capturing circuit (CCD or CMOS sensor) of the portable device towards the capture scene. If the video frames are captured in a landscape mode, the portable video capturing device is in a reference position (or horizontal position). If the video frames are captured in a portrait mode, the orientation of the portable video capturing device is substantially 90 or 270 degrees from the reference position. If the video frames are captured in an upside-down landscape mode, the orientation of the portable video capturing device is substantially 180 degrees from the reference position.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

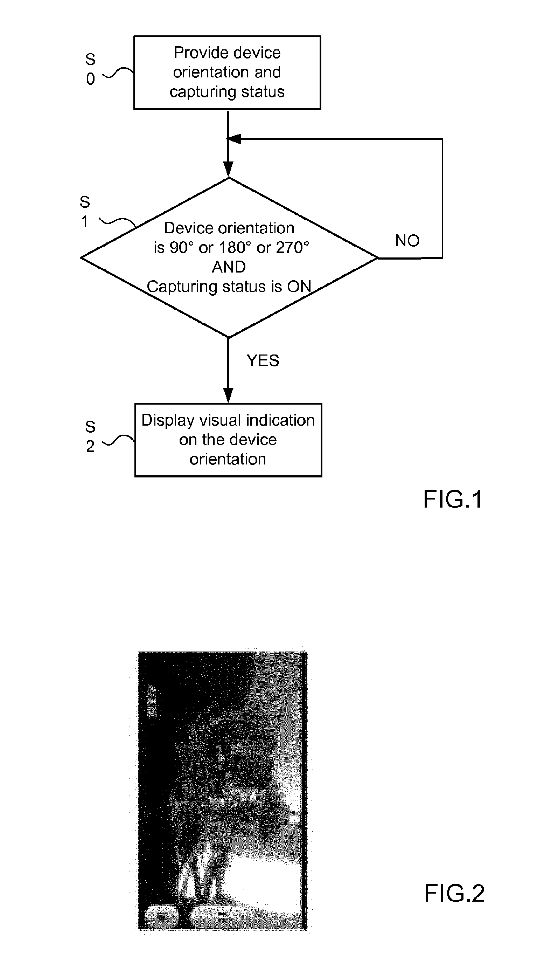

Fig.1 shows a flow chart of a method in accordance with the present invention.

In a step SO, an orientation value and a capturing status, ON or OFF, of the video capturing device are provided. The orientation value can be outputted by a dedicated orientation sensor, for example a gyroscope, embedded in the portable video capturing device. As a variant, the orientation value can be computed by analyzing the video content of the video frames captured by the video capturing device. Such a variant can be implemented by various methods, for example the method disclosed in the publication "Detecting image orientation based on low-level visual content", Yongmei Michelle Wand and Hongjiang Zhang, Computer Vision and Image Understanding 93 (2004), pp328-346, available at www.ElsevierComputerScience.com. In this paper, the image orientation can be interpreted as the device orientation since the orientation of the image sensor of the video capturing device is identical to the orientation of the video capturing device.

If the video frames are captured in a landscape mode by the portable video capturing device, the orientation value is about 0 degree. If the video frames are captured in a portrait mode, the orientation value is about 90 or 270 degrees. And if the video frames are captured in an upside-down landscape mode, the orientation value is about 180 degrees.

The capturing status, ON or OFF, can be detected by various ways. This capturing may be for example read from the frame memory of the video capturing device using a dedicated Access Protocol Interface (API). If video frames are currently stored in this memory, it means that the video capturing device is capturing video frames. The capturing status is ON. If video frames are not currently stored in the memory, the capturing status is OFF.

In a step S1, it is determined if the orientation value delivered by the orientation sensor or computed by content analysis of the captured video frames is substantially equal to 90°, 180° or 270° and if the capturing status of the portable video capturing device is ON. If these two conditions are fulfilled, a visual indication on the device orientation is displayed on a screen coupled to the video capturing device at a step S2. This screen may be the screen of the video capturing device or a screen connected to the video capturing device.

Thus, the user is informed that he is capturing video frames in a portrait mode or an upside-down landscape mode which are not adapted to the format of the most widespread screens and which can be difficult to use for video editing.

Then when viewing the visual indication the user may decide or not to rotate his video capturing device in order to put it back in the reference orientation (horizontal position).

The visual indication may be a symbol displayed on top of video frames displayed on the display screen. This embodiment is illustrated by Figure 2 wherein the visual indication is a semi-transparent "V" (for Vertical) superimposed on the center of the video frames.

This symbol may eventually blink to draw the attention of the user.

Of course, the size and the location of the visual indication may vary.

This visual indication may also differ somewhat depending on the device orientation is 90°, 180° or 270°. The visual indication is a V for the device orientation of 90° and 270° and a U (for upside-down) for the device orientation of 180°.

In another embodiment, the visual indication is an alteration of the video frames displayed on the display screen. For example a shaded version of the video frames is displayed on the display screen.

The displaying of this visual information may be an option proposed by the menu of the video capturing device. It may be disabled in case the user does not want to get warnings of his capturing in a portrait mode or in an upside-down landscape mode.

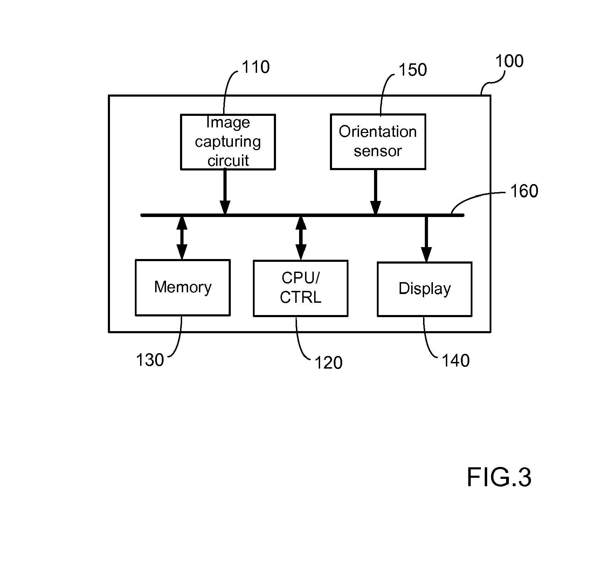

Figure 3 represents an exemplary architecture of a portable video capturing device 100 configured to above described method. The device 100 comprises:
- an image capturing circuit 110 for capturing video frames, such as a CCD (for Charge-Coupled Device) or a CMOS (for Complementary Metal-Oxide-Semiconductor)sensor;
- one or more processor(s) 120, which is(are), for example, a CPU, a GPU and/or a DSP (English acronym of Digital Signal Processor) for controlling the video capturing device; this processor is a control unit for the video capturing device;
- at least one memory 130 for storing the captured video frames and a computer program; the computer program comprises instructions which, when executed by the device 100, in particular by the processor(s) 120, make the device 100 carry out the method described before with reference to figure 1;
- a display screen 140 for displaying the captured video frames and the visual indicator as described in reference to the step S2; and
- an orientation sensor 150, such as a gyroscope, for determining the orientation of the portable video capturing device.

All these elements are connected together via a bus 160 such that the processor (or control unit) 120 can control them.

In a variant, the determination of the orientation of the portable video capturing device is made by analyzing the video content of the captured video frames. This analysis may be implemented by the processor 120 or other dedicated processors.

According to exemplary and non-limitative embodiments, the portable video capturing device 100 is a device that belongs to a set comprising:
- a smartphone,
- a tablet (or tablet computer) ;
- a laptop ;
- a still image camera; and
- a video camera or camcorder.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

## Claims

1. Method for displaying at least one video frame on a display screen coupled to a portable video capturing device, **characterized in that** said method comprises the steps of:
- determining (S1) if the orientation of said portable video capturing device is substantially equal to 90 or 180 or 270 degrees from a reference orientation, said determination constituting a first condition to be met,- determining (S1) if the portable video capturing device is capturing at least one video frame, said determination constituting a second condition to be met, and
- if said first and second conditions are met, displaying (S2), on said display screen, said at least one video frame and a visual indicator indicating that the orientation of the portable video capturing device is substantially equal to 90 or 180 or 270 degrees from the reference orientation and if the portable video capturing device is capturing at least one video frame.

2. Method according claim 1, wherein the orientation of the portable video capturing device is determined by a sensor embedded in the portable video capturing device.

3. Method according claim 2, wherein the sensor is a gyroscope.

4. Method according claim 1, wherein the orientation of the portable video capturing device is determined by analyzing the video content of said at least one video frame.

5. Method according any one of claims 1 to 4, wherein the visual indication is a symbol displayed on top of the at least one video frame displayed on the display screen.

6. Method according any one of claims 1 to 4, wherein the visual indication is an alteration of the at least one video frame displayed on the display screen.

7. A portable video capturing device (100) comprising
- an image capturing circuit (110) for capturing at least one video frame,
- a memory (130) for storing the captured video frame,
- a display screen (140) for displaying the captured video frame, and
- a control unit (120) for controlling said image capturing circuit, said memory and said display screen,
**characterized in that** the control unit is configured to:
- determine if the orientation of said portable video capturing device is substantially equal to 90 or 180 or 270 degrees from a reference orientation and if the portable video capturing device is capturing at least one video frame, said determinations constituting respectively first and second conditions to be met, and
- if said first and second conditions are met, display, on the display screen, said at least one video frame and a visual indicator indicating that the orientation of the portable video capturing device is substantially equal to 90 or 180 or 270 degrees from the reference orientation.

8. The portable video capturing device of claim 7, wherein it further comprises an orientation sensor (150) for determining the orientation of the portable video capturing device, said orientation being provided to the control unit for determining if the orientation of the portable video capturing device is substantially equal to 90 or 180 or 270 degrees.

9. The portable video capturing device of claim 8, wherein the orientation sensor is a gyroscope.

10. The portable video capturing device of claim 7, wherein the control unit comprises a video processing unit for analyzing the video content of the captured video frame and determining the orientation of the portable video capturing device.
